# EUROPEAN PATENT APPLICATION

(11) **EP 4 628 337 A1**
(43) Date of publication of application: **08.10.2025**
(21) Application number: 24168768.0
(22) Date of filing: 05.04.2024
(51) Int. Cl.: B60K 1/04, H01M 50/262, B60K 15/07, B60K 15/063

(54) **ENERGY STORAGE SUSPENSION ARRANGEMENT**

(71) Applicant: VOLVO TRUCK CORPORATION, 405 08 Göteborg (SE)
(72) Inventor: RÖNNBERG, Marcus, 461 57 TROLLHÄTTAN (SE); TAVARES, Filipe, 437 92 LINDOME (SE)
(74) Representative: Kransell & Wennborg KB

(57) **Abstract**

The present disclosure relates to an energy storage suspension arrangement, comprising a first member (102) having an extension between a first end (104) and a second end (106), the first end comprising a first aperture (108) and the second end comprising a through hole (114), the first member comprising a support surface (116) arranged at a distance from the second end, a second member (202) having an extension and comprising a first end (204) and a second end (206), wherein the first end of the second member face the second end (106) of the first member, and a nut (210) rotationally locked in a second aperture (208) of the second member, and a rod (300) arranged through the through hole of the first member and threaded to internal threads of the nut, the rod comprising an abutment surface (302) connected to the support surface of the first member to connect the first and second members to each other.

## Description

### TECHNICAL FIELD

The disclosure relates generally to energy storage systems. In particular aspects, the disclosure relates to an energy storage suspension arrangement. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

For heavy duty vehicles, the energy storage arrangements, often in the form of traction batteries, need to be relatively large in size to be able to contain a sufficient level of energy such that the vehicle can be operated at an acceptable range using the electric traction motors. In detail, the energy storage arrangements preferably comprises a plurality of energy storage modules to enable for the desirable range of the vehicle. It is however a challenge to assemble these plurality of energy storage modules to form an arrangement that is compact and simple to assemble/disassembly, while still providing sufficient strength to suspend the energy storage modules.

### SUMMARY

According to a first aspect of the disclosure, there is provided an energy storage suspension arrangement, comprising: a first member having an extension along a first geometric axis between a first end and a second end, the first end comprising a first aperture and the second end comprising a through hole, the first member comprising a support surface arranged at a distance from the second end in a direction towards the first end of the first member, a second member having an extension along the first geometric axis and comprising a first end and a second end, wherein the first end of the second member face the second end of the first member, the first end of the second member comprising a second aperture, and a nut rotationally locked in the second aperture, the nut comprising internal threads, and a rod arranged through the through hole of the first member and threaded to the internal threads of the nut, the rod comprising an abutment surface connected to the support surface of the first member to connect the first and second members to each other.

The first aspect of the disclosure may seek to solve the problem of suspending energy storage modules in a compact manner. A technical benefit may include that a plurality of energy storage modules can, by means of the energy storage suspension arrangement, be stacked in layers on top of each other and suspended by the energy storage suspension arrangement. A further technical benefit may include that the use of a first and second member as described above may enable for a simplified assembly method where the layers can be stacked in consecutive order. The first member may thus suspend a first layer of energy storage modules while the second member may suspend a second layer of energy storage modules. The first aspect may also improve the modularity for connecting even further layers of energy storage modules by e.g. connecting a third member to the second member to suspend a third layer of energy storage modules. Such third member may hence simply be connected to the second layer using a second rod.

As indicated above, the first and second members each has an extension along the first geometric axis. The first and second members thus has a first elongation along the first geometric axis. The first and second members may advantageously have a second elongation along a second geometric axis, which second geometric axis is substantially perpendicular to the first geometric axis. The first elongation may constitute a cross section of the first and second member.

Further, the abutment surface of the rod may be arranged in direct abutment with the support surface. Alternatively, the abutment may be connected to the support surface by the use of an intermediate element, such as e.g. a washer.

Optionally in some examples, including in at least one preferred example, the first and second ends of the first member are arranged on opposite sides of the first member. The first end may advantageously be an outer end and the second end may be an outer end of the first member.

Optionally in some examples, including in at least one preferred example, the first and second ends of the second member are arranged on opposite sides of the second member. The first end may advantageously be an outer end and the second end may be an outer end of the second member.

Optionally in some examples, including in at least one preferred example, the nut is locked to the second aperture in the direction of the first geometric axis. A technical benefit may include that the nut is prevented from rotating as well as prevented from being displaced along the first elongation. Various examples of preventing the nut from rotating relative to the second aperture are conceivable. For example, an outer envelope surface of the nut, as well as a surface of the second aperture may be formed by surface edge portions that interferes to prevent the nut from rotating. A non-limiting example may be a hex-shaped surface of the nut and the second aperture. As will be detailed below, the nut may alternatively comprise external threads that are arranged in meshing engagement with internal threads of the second aperture to prevent the nut from rotating. The displacement along the first geometric axis may be obtained in various different manners. For example, the nut may comprise a protrusion that is inserted in a recess of the second aperture. For example, the nut may be guided into the second aperture in the direction of the first geometric axis and subsequently slightly rotated into the recess, whereby the nut is prevented from moving in the direction of the first geometric axis. According to another example, and as will be detailed below, the exemplified external threads of the nut may prevent the nut from being displaced along the first geometric axis.

Optionally in some examples, including in at least one preferred example, the nut comprises external threads and the second aperture comprises internal threads, the external threads of the nut being arranged in meshing engagement with the internal threads of the second aperture to rotationally lock the nut in the second aperture. A technical benefit may include, as indicated above, that the external threads can prevent the nut from rotating as well as preventing displacement in the direction of the first geometric axis when the nut is threaded into the external threads.

Optionally in some examples, including in at least one preferred example, the first member comprises a second nut rotationally fixed in the first aperture, the second nut comprises internal threads arranged to be in meshing engagement with external threads of a fastener element arranged to connect the first member to an external vehicle structure. A technical benefit may include that the external vehicle structure can be sufficiently attached to the energy storage suspension arrangement. The external vehicle structure may, for example, be a top cover below which the energy storage modules can be housed. The energy storage modules can hereby be protected from e.g. external damage and/or debris. According to another non-limiting example, the external vehicle structure may be a frame of the vehicle. The energy storage suspension arrangement may hereby be suspended to the frame by the fastener element fixated to the first aperture via the second nut.

According to an example, the nut may advantageously be fixed in the direction along the first geometric axis. This can be obtained in various manners, for example in a similar vein as those described above in relation to the nut arranged in the second aperture.

Optionally in some examples, including in at least one preferred example, the second nut comprises external threads and the first aperture comprises internal threads, the external threads of the nut being arranged in meshing engagement with the internal threads of the first aperture to rotationally lock the nut in the first aperture. A technical benefit may include that the external threads can prevent the second nut from rotating as well as preventing displacement in the direction of the first geometric axis when the second nut is threaded into the external threads of the first aperture.

Optionally in some examples, including in at least one preferred example, the through hole of the first member extends along the first geometric axis.

Optionally in some examples, including in at least one preferred example, the first aperture is a first through hole extending along the first geometric axis.

Optionally in some examples, including in at least one preferred example, the second aperture is a second through hole extending along the first geometric axis.

Optionally in some examples, including in at least one preferred example, a diameter of the second aperture is larger compared to a diameter of the through hole of the first member.

Optionally in some examples, including in at least one preferred example, the rod is an elongated rod extending along the first geometric axis.

Optionally in some examples, including in at least one preferred example, the rod comprises a head portion, the abutment surface being arranged on the head portion.

Optionally in some examples, including in at least one preferred example, the energy storage suspension arrangement further comprises a sealing element arranged between the second end of the first member and the first end of the second member. A technical benefit may include that the energy storage modules may be arranged in a sealed compartment at which e.g. moisture and particles can be prevented to enter.

Optionally in some examples, including in at least one preferred example, the first and second members have the same shape and dimensions. A technical benefit may include that a simplified manufacturing of the energy storage suspension arrangement can be obtained since the first and second members can be formed by the same production method and care does not need to be taken to separately manufacture the first and second members. Put it differently, the modularity can be improved by forming the first and second members in the same shape and with the same dimensions.

Optionally in some examples, including in at least one preferred example, at least one of the first and second members is formed by metal extrusion. A technical benefit may include that a simple manufacturing method can be obtained. Once extruded, the first and second apertures, and the through holes can be drilled to the first and second members, respectively.

According to a second aspect, there is provided an energy storage system assembly, comprising at least one energy storage module, and an energy storage suspension arrangement according to any one of the examples described above in relation to the first aspect, wherein the least one energy storage module is at least partly supported by the energy storage suspension arrangement.

Effects and features of the second aspect are largely analogous to those described above in relation to the first aspect.

According to a third aspect, there is provided a vehicle, comprising an energy storage system assembly according to the second aspect.

Effects and features of the second aspect are largely analogous to those described above in relation to the first aspect.

According to a fourth aspect, there is provided a method of assembling an energy storage suspension arrangement, the method comprising rotationally locking a nut to a second aperture arranged at a first end of a second member, positioning a second end of a first member in abutment with the first end of the second member, and guiding a rod through a through hole arranged at the second end of the first member and thread the rod to internal threads of the nut to connect the first and second members to each other.

As indicated above, a simple assembly method for forming the energy storage suspension arrangement. Also, the method enables for the attachment of one or more additional members if a larger energy storage suspension arrangement is desirable. For example, a third member may be connected to the second member in a similar, or the same, manner as connecting the second member to the first member.

Optionally in some examples, including in at least one preferred example, the method further comprising connecting a first end of the first member to an external vehicle structure.

Optionally in some examples, including in at least one preferred example, the first end of the first member is connected to the external vehicle structure by a fastener element attached to a first aperture arranged at the first end of the first member.

Further effects and features of the fourth aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is a perspective view of an exemplary energy system assembly and an energy storage suspension arrangement according to an example,
Fig. 3 is an exemplary illustration of a layer housing one or more energy storage modules of the energy storage system assembly according to an example,
Fig. 4 is a detailed exemplary illustration of the energy storage suspension arrangement according to an example, and
Fig. 5 is an exemplary flow chart of a method of assembling the energy storage suspension arrangement according to an example.

### DETAILED DESCRIPTION

The detailed description set forth below provides information and examples of the disclosed technology with sufficient detail to enable those skilled in the art to practice the disclosure.

The following aims at describing an energy storage suspension arrangement that enables for a compact solution where layers of energy storage modules can be stacked to each other in a vertical direction. This may in turn provide for an energy storage system which can provide for a desirable operating range of an electric traction motor operable to propel a vehicle. In addition, the following disclosure may provide for an energy storage suspension arrangement which enables for improved modularity and a simplified assembly procedure.

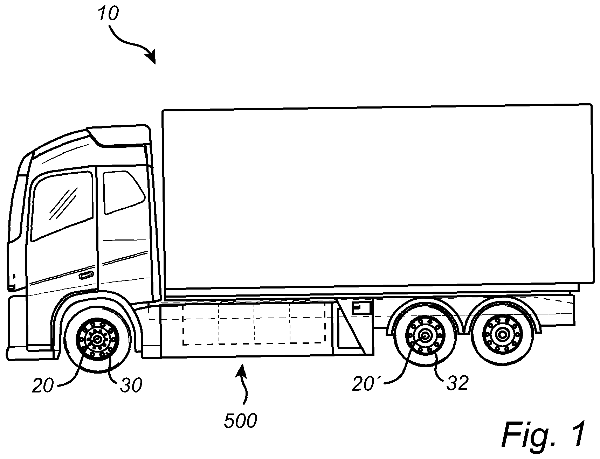

Turning to Fig. 1, which is an exemplary illustration of a vehicle 10 according to an example. The exemplified vehicle 10 comprises one or more electric traction motors arranged to propel the vehicle 10. In the example depicted in Fig. 1, the vehicle 10 comprises a first electric traction motor 20 in the form of a wheel hub motor connected to one of the front pair wheels 30 of the vehicle, and a second electric traction motor 20' in the form of a wheel hub motor connected to one of the rear pair of wheels 32. It should however be observed that the vehicle 10 may equally as well comprise one single electric traction motor connected to a pair of wheels via e.g. a propulsion shaft. The vehicle 10 may also be a so-called hybrid vehicle comprising an electric traction motor in combination with a traditional internal combustion engine. Although not depicted, the vehicle 10 may also comprise a fuel cell arranged to generate electric energy to be fed to an energy storage module, and/or to the electric traction motor(s).

The vehicle 10 also comprises an energy storage system assembly 500. The energy storage system assembly 500 comprises at least one energy storage module. The at least one energy storage module may preferably be an electric traction battery connected to the electric traction motor(s) 20, 20', wherein electric energy is fed to the electric traction motor(s) 20, 20' during propulsion of the vehicle 10. The electric traction battery may also receive electric energy generated by the electric traction motor(s) 20, 20' during regenerative braking. The at least one energy storage module may alternatively or additionally be a gas tank comprising e.g. hydrogen gas that can be fed to the above described fuel cell.

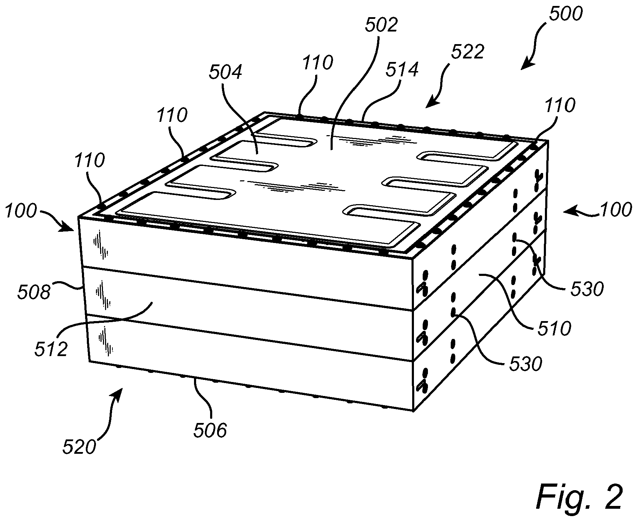

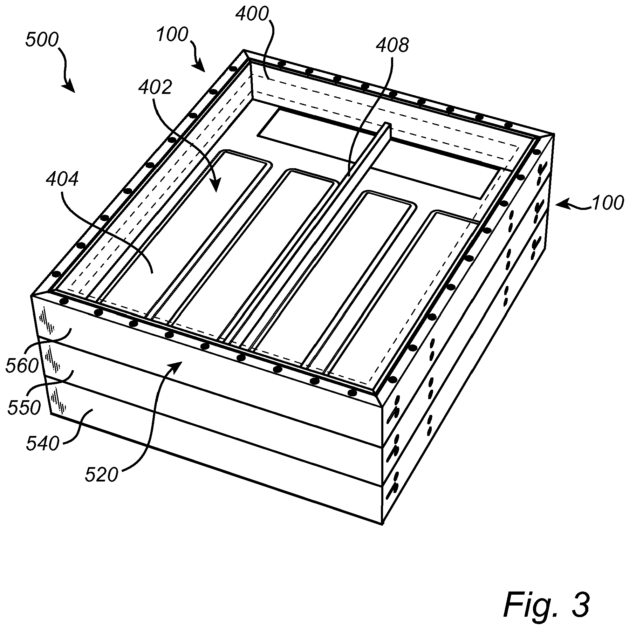

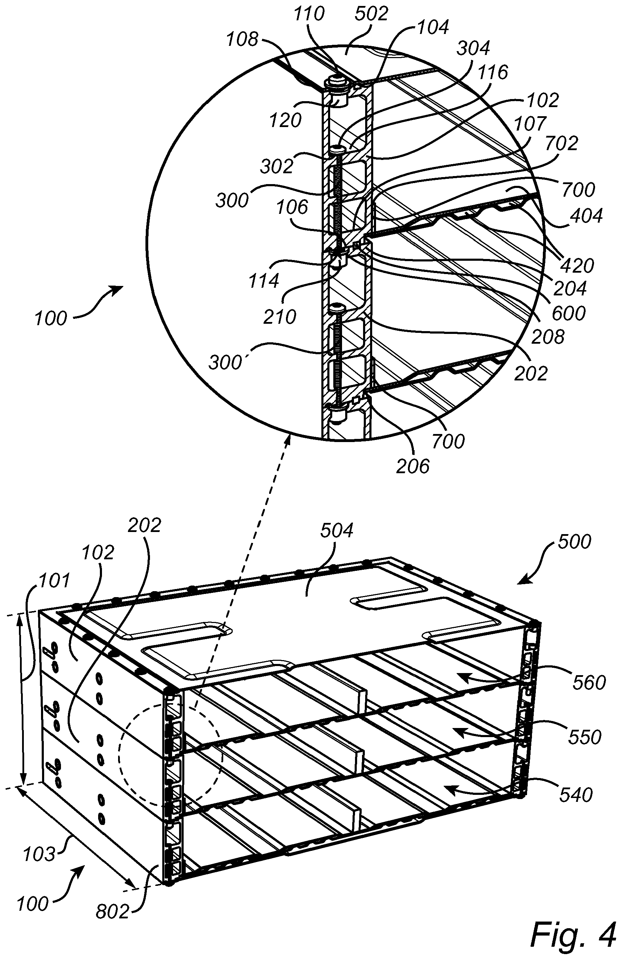

In order to describe the energy storage system assembly 500 in further detail, reference is made to Fig. 2 which is a perspective view of an exemplary energy system assembly and an energy storage suspension arrangement according to an example. The exemplified energy storage system assembly 500 is arranged in the form of a housing, wherein the at least one energy storage module is accommodated inside the housing as will be further elaborated upon below with reference to the description of Figs. 3 and 4. The energy storage system assembly 500 comprises an external vehicle structure 502 in the form of a top cover 504, and a bottom floor 506. The top cover 504 thus forms the upper surface of the energy storage system assembly 500 while the bottom floor forms the lower surface of the energy storage system assembly 500. The energy storage system assembly 500 also comprises side walls defining an envelope surface of the energy storage system assembly 500. In the exemplification depicted in Fig. 2, the energy storage system assembly 500 comprises four side walls, i.e. a first 508, a second 510, a third 512 and a fourth 514 side wall. Accordingly, the side walls 508, 510, 512, 514 together with the top cover 504 and the bottom floor 506 form an enclosure in which the energy storage modules can be accommodated.

In particular, the first side wall 508 and the second side wall 510 form part of an energy storage suspension arrangement 100. The third side wall 512 and the fourth side wall 514 are exemplified as a respective first 520 and second 522 cross beam connected to the energy storage suspension arrangement 100. The energy storage suspension arrangement 100 may advantageously suspend the energy storage module(s) arranged in the enclosed housing. The cross beams 520, 522 may also form part of the suspension of the energy storage module(s). The top cover 504 is preferably attached to the energy storage arrangement 100 and to the cross beams 520, 522 by a plurality of fastener elements 110. The fastener elements may be screws which will be described in further detail below. Furthermore, the energy storage system assembly 500 may be connected to a frame of the vehicle 10 depicted in Fig. 1 in various different ways. As a non-limiting example, the energy storage system assembly 500 can be bolted/screwed to the frame by connecting bolts/screws through the frame and into holes 530 arranged in the energy storage suspension arrangement 100. According to such example, the energy storage suspension arrangement 100 is extending in a longitudinal direction of the vehicle 10, while the cross beams 520, 522 extend in a transversal direction.

Reference is made to Fig. 3, which is an exemplary illustration of an upper layer that houses one or more energy storage modules 400 of the energy storage system assembly 500 according to an example. The above described top cover 504 has been removed in Fig. 3. In the example depicted in Fig. 3, the energy storage system assembly 500 comprises a first 540, a second 550 and a third 560 layer, where each layer houses at least one energy storage module. In particular, and with reference to the example depicted in Fig. 3, the first layer 540 is a bottom layer, the second layer 550 is a mid-layer and the third layer 560 is the upper layer. The energy storage system assembly 500 may of course comprise less than three layers, such as two layers. Also, more layers are also conceivable and can be connected to the first layer 540.

With particular reference to the third layer 560, i.e. the upper layer, it is arranged to accommodate the at least one energy storage module 400. Fig. 3 depicts a single energy storage module 400 arranged in the space 402 forming the upper layer. It should however be readily understood that a plurality of energy storage modules can be accommodated in the space 402 forming the upper layer 560. As can be seen in Fig. 3, the upper layer 560 comprises a floor portion 404, as well as a longitudinally extending load carrying beam 408. The longitudinally extending load carrying beam 408 may be connected to the cross beams 520 of the upper layer 560. The energy storage module 400 is in turn preferably connected to the longitudinally extending load carrying beam 408.

As can be observed, only the space 402 forming the upper layer 560 is illustrated in Fig. 3 and it should be readily understood that the space forming the first layer 540 as well as the space forming the second layer 550 may advantageously be arranged in a similar vein as the above described space forming the upper layer 560.

In order to describe the energy storage suspension arrangement 100 in further detail, reference is made to Fig. 4 which is a detailed exemplary illustration of the energy storage suspension arrangement 100 according to an example. In particular, Fig. 4 is a cross-sectional view illustrating the space of the three layers in further detail according to an example. As can be seen in Fig. 4, the floor portion 404 comprises coolant channels 420. A coolant may hence be arranged to flow in these coolant channels 420 to control a temperature of the at least one energy storage module.

The following will now describe the above defined energy storage suspension arrangement 100 in further detail. The energy storage suspension arrangement 100 comprises a first member 102 and a second member 202. Each of the first 102 and second 202 members extends along a first geometric axis 101. In particular, the first member 102 extends along the first geometric axis 101 between a first end 104 and a second end 106 of the first member 102, and the second member 202 extends between a first end 204 and a second end 206 of the second member 202. The first 104 and second 106 ends of the first member 102 are thus arranged on opposite sides of the first member 102 relative to the first geometric axis 101 and the first 204 and second 206 ends of the second member 202 are thus arranged on opposite sides of the second member 202 relative to the first geometric axis 101. As can be seen in the detailed portion of Fig. 4, the first end 204 of the second member 202 face the second end 106 of the first member 102.

Furthermore, first member 102 comprises a support surface 116. In the exemplified illustration of Fig. 4, the support surface 116 is arranged between the first 104 and second 106 ends of the first member 102. It should however be readily understood that the support surface 116 does not need to be arranged in the specific position depicted in Fig. 4, as long as it is arranged at a distance away from the second end 104 in a direction towards the first end. It could hence equally as well be arranged closer to any one of the first 104 and second 106 ends of the first member 102. In fact, the support surface 116 may, according to an example, be arranged at the first end 104 or at an upper side 107 of a structure forming the second end 106, i.e. on an opposite side of the structure compared to the second end 106. The purpose of the support surface 116 will be further evident below.

Moreover, the first member 102 also comprises a first aperture 108 and a through hole 114. The first aperture 108 is arranged at the first end 104 and the through hole 114 is arranged at the second end 106. The first aperture 108 and the through hole 114 may both extend in the direction of the first geometric axis 101. Also, the second member 202 comprises a second aperture 208 in which a nut 210 is rotationally locked. The nut 210 may also preferably be locked in the direction of the first geometric axis 101. Locking the nut in the rotational direction and in the direction of the first geometric axis 101 may be obtained in different ways and according to an example, the nut 210 comprises external threads that are arranged in meshing engagement with internal threads of the second aperture 208. According to an example, the second aperture 208 may be a second through hole, wherein the nut 210 can be threaded through all, or part of, the second through hole.

In the example depicted in Fig. 4, the first member 102 also comprises a second nut 120. The second nut 120 is rotationally fixed in the first aperture 108. The second nut 120 preferably comprises internal threads arranged in meshing engagement with a fastener element 110, such as a screw or threaded bolt, which fastener element 110 in turn connects the first member 102 to the above described external vehicle structure 502, which in Fig. 4 is illustrated as the top cover 504. The first aperture 108 may be a through hole. The second nut 120 may advantageously be rotationally fixed in the first aperture by being provided with external threads that are arranged in meshing engagement with internal threads of the first aperture 108. According to an example, and in a similar vein as the second aperture 208, the first aperture 108 may be a first through hole, whereby the second nut 120 can be threaded through all, or part of, the first through hole.

The energy storage suspension arrangement 100 further comprises a rod 300. As is illustrated in Fig. 4, the rod may preferably be an elongated rod extending along the first geometric axis 101. Further, the rod 300 is arranged through the through hole 114 of the first member, and threaded to the internal threads of the nut 210. The rod comprises an abutment surface 302, which is preferably arranged on a head portion 304 of the rod 300. The abutment surface 302 of the rod is connected to the above described support surface 116 of the first member 102. Hereby, the rod 300 connects the first 102 and second 202 members to each other. The abutment surface 302 of the rod 300 may be arranged in direct abutment with the support surface 116. As an alternative, a washer or other element may be arranged between the abutment surface 302 and the support surface 116. In such a case, the abutment surface 302 is connected to the support surface 116 via such washer element.

The above description relates to the connection of the first 102 and second 202 members. As can be seen in Fig. 4, the energy storage suspension arrangement 100 may comprise additional members, such as e.g. a third member 802. The second member 202 is in this case preferably connected to the third member 802 by a second rod 300' in a similar manner as the connection described above between the first 102 and second 202 members.

However, in the case of using solely a first 102 and a second 202 member, i.e. no third member is connected to the second member, the support surface 116 of the first member 102 may be arranged at the first end 104 of the first member 102. The rod 300 is in this example extending from the first end 104 to the second end 106 of the first member 102 and threaded to the nut 210 arranged in the second aperture 208 of the second member 202. Also, in such an example, the energy storage suspension arrangement 100 does not comprise the above described second nut 120 and fastener element 110. On the contrary, the rod 300 may hereby serve the purposes obtained by the fastener element 110. Moreover, and as described above, the support surface 116 may alternatively be arranged closer to the second end 106 of the first member 102 compared to the illustration in Fig. 4.

The energy storage suspension arrangement 100 may further comprise a sealing element 600. The sealing element 600 may preferably be arranged between the second end 106 of the first member 102 and the first end 204 of the second member 202. The sealing element 600 may hereby prevent moisture from entering the space in which the one or more energy storage modules 400 are accommodated.

Moreover, the energy storage suspension arrangement 100 may also comprise an energy storage connecting portion 700. The energy storage connecting portion 700 is configured to be connected to the above described energy storage module 400. Thus, the energy storage modules 400 may be supported onto an upper end 702 of the energy storage connecting portion 700. Hereby, the energy storage module 400 is suspended by the energy storage suspension arrangement 100. An air gap may hereby be present between the floor portion 404 and the energy storage module 400. Alternatively, the above described transversally extending load carrying beam 406 may be connected to the energy storage connecting portion 700 such that the load from the one or more energy storage modules 400 is transferred to the energy storage suspension arrangement 100. The energy storage connecting portion 700 is depicted as a heel portion arranged on the first member 102. The energy storage connecting portion 700 may of course be arranged in other shapes, such as e.g. a C-shaped portion, an L-shaped portion, etc.

Furthermore, the first member 102 is preferably manufactured by metal extrusion. The first member 102 is hereby formed by extrusion in an extrusion direction along a second geometric axis 103, which second geometric axis 103 is substantially perpendicular to the first geometric axis 101. According to an example, the first 102 and second 202 members have the same shape and dimensions. The second member 202 may thus also be manufactured by metal extrusions in an extrusion direction along the second geometric axis 103. Also, the first 102 and second 202 members may be formed by the same material, such as a metal material. According to an example, the metal material may be aluminum.

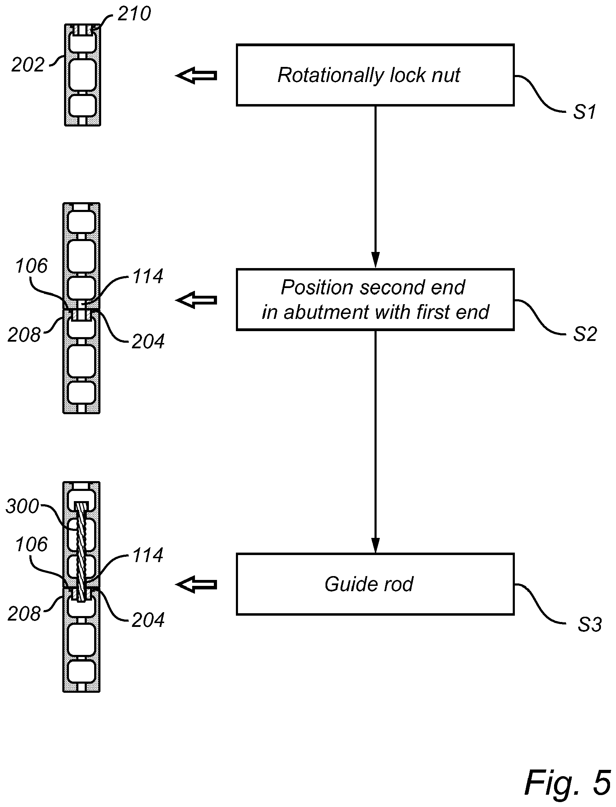

Reference is now made to Fig. 5 which is an exemplary flow chart of a method of assembling the energy storage suspension arrangement according to an example. Initially, second member 202 is provided and the nut 210 is rotationally locked S 1 to the second aperture 208. Thereafter, the first member 102 is provided and the second end 106 is positioned S2 in abutment with the first end 204 of the second member 202. Hereby, the above described through hole 114 of the first member 102 is aligned with the second aperture 208 of the second member 202. The rod 300 is thereafter guided S3 through the through hole 114 of the first member 102 and threaded to the internal threads of the nut 210. The first and second members are hereby connected to each other.

Subsequently, the method may further comprise connecting the first end 104 of the first member 102 to the external vehicle structure 502, which in the example depicted in Fig. 2 is the top cover. As indicated above, the energy storage suspension arrangement 100 may comprise a third member. In such a case, the second member 202 is initially connected to the third member by using a second rod, whereafter the first member 102 is connected to the second member 202 as described above.

### EXAMPLE LIST

Example 1. An energy storage suspension arrangement, comprising: a first member having an extension along a first geometric axis between a first end and a second end, the first end comprising a first aperture and the second end comprising a through hole, the first member comprising a support surface arranged at a distance from the second end in a direction towards the first end of the first member, a second member having an extension along the first geometric axis and comprising a first end and a second end, wherein the first end of the second member face the second end of the first member, the first end of the second member comprising a second aperture, and a nut rotationally locked in the second aperture, the nut comprising internal threads, and a rod arranged through the through hole of the first member and threaded to the internal threads of the nut, the rod comprising an abutment surface connected to the support surface of the first member to connect the first and second members to each other.

Example 2. The energy storage suspension arrangement of example 1, wherein the first and second ends of the first member are arranged on opposite sides of the first member.

Example 3. The energy storage suspension arrangement of any one of examples 1 or 2, wherein the first and second ends of the second member are arranged on opposite sides of the second member.

Example 4. The energy storage suspension arrangement of any one of the preceding examples, wherein the nut is locked to the second aperture in the direction of the first geometric axis.

Example 5. The energy storage suspension arrangement of any one of the preceding examples, wherein the nut comprises external threads and the second aperture comprises internal threads, the external threads of the nut being arranged in meshing engagement with the internal threads of the second aperture to rotationally lock the nut in the second aperture.

Example 6. The energy storage suspension arrangement of any one of the preceding examples, wherein the first member comprises a second nut rotationally fixed in the first aperture, the second nut comprises internal threads arranged to be in meshing engagement with external threads of a fastener element arranged to connect the first member to an external vehicle structure.

Example 7. The energy storage suspension arrangement of example 6, wherein the second nut comprises external threads and the first aperture comprises internal threads, the external threads of the second nut being arranged in meshing engagement with the internal threads of the first aperture to rotationally lock the second nut in the first aperture.

Example 8. The energy storage suspension arrangement of any one of the preceding examples, wherein the through hole of the first member extends along the first geometric axis.

Example 9. The energy storage suspension arrangement of any one of the preceding examples, wherein the first aperture is a first through hole extending along the first geometric axis.

Example 10. The energy storage suspension arrangement of any one of the preceding examples, wherein the second aperture is a second through hole extending along the first geometric axis.

Example 11. The energy storage suspension arrangement of any one of the preceding examples, wherein a diameter of the second aperture is larger compared to a diameter of the through hole of the first member.

Example 12. The energy storage suspension arrangement of any one of the preceding examples, wherein the rod is an elongated rod extending along the first geometric axis.

Example 13. The energy storage suspension arrangement of any one of the preceding examples, wherein the rod comprises a head portion, the abutment surface being arranged on the head portion.

Example 14. The energy storage suspension arrangement of any one of the preceding examples, wherein the energy storage suspension arrangement further comprises a sealing element arranged between the second end of the first member and the first end of the second member.

Example 15. The energy storage suspension arrangement of any one of the preceding examples, wherein the first and second members have the same shape and dimensions.

Example 16. The energy storage suspension arrangement of any one of the preceding examples, wherein at least one of the first and second members is formed by metal extrusion.

Example 17. An energy storage system assembly, comprising at least one energy storage module, and an energy storage suspension arrangement according to any one of the preceding examples, wherein the least one energy storage module is at least partly supported by the energy storage suspension arrangement.

Example 18. A vehicle, comprising an energy storage system assembly according to example 17.

Example 19. A method of assembling an energy storage suspension arrangement, the method comprising: rotationally locking a nut to a second aperture arranged at a first end of a second member, positioning a second end of a first member in abutment with the first end of the second member, and guiding a rod through a through hole arranged at the second end of the first member and thread the rod to internal threads of the nut to connect the first and second members to each other.

Example 20. The method of example 19, further comprising: connecting a first end of the first member to an external vehicle structure.

Example 21. The method of example 20, wherein the first end of the first member is connected to the external vehicle structure by a fastener element attached to a first aperture arranged at the first end of the first member.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An energy storage suspension arrangement (100), comprising:
- a first member (102) having an extension along a first geometric axis between a first end (104) and a second end (106), the first end (104) comprising a first aperture (108) and the second end (106) comprising a through hole (114), the first member comprising a support surface (116) arranged at a distance from the second (106) end in a direction towards the first end of the first member (102),
- a second member (202) having an extension along the first geometric axis and comprising a first end (204) and a second end (206), wherein the first end (204) of the second member (202) face the second end (106) of the first member (102), the first end (204) of the second member (202) comprising a second aperture (208), and a nut (210) rotationally locked in the second aperture (208), the nut (210) comprising internal threads, and
- a rod (300) arranged through the through hole (114) of the first member (102) and threaded to the internal threads of the nut (210), the rod (300) comprising an abutment surface (302) connected to the support surface (116) of the first member (102) to connect the first (102) and second (202) members to each other.

2. The energy storage suspension arrangement of claim 1, wherein the first (104) and second (106) ends of the first member (102) are arranged on opposite sides of the first member (102).

3. The energy storage suspension arrangement of any one of claims 1 or 2, wherein the first (204) and second (206) ends of the second member (202) are arranged on opposite sides of the second member (202).

4. The energy storage suspension arrangement of any one of the preceding claims, wherein the nut is locked to the second aperture in the direction of the first geometric axis.

5. The energy storage suspension arrangement of any one of the preceding claims, wherein the nut (210) comprises external threads and the second aperture (208) comprises internal threads, the external threads of the nut being arranged in meshing engagement with the internal threads of the second aperture to rotationally lock the nut in the second aperture.

6. The energy storage suspension arrangement of any one of the preceding claims, wherein the first member (102) comprises a second nut (120) rotationally fixed in the first aperture (108), the second nut (120) comprises internal threads arranged to be in meshing engagement with external threads of a fastener element (110) arranged to connect the first member to an external vehicle structure.

7. The energy storage suspension arrangement of claim 6, wherein the second nut (120) comprises external threads and the first aperture (108) comprises internal threads, the external threads of the second nut (120) being arranged in meshing engagement with the internal threads of the first aperture (108) to rotationally lock the second nut (120) in the first aperture (108).

8. The energy storage suspension arrangement of any one of the preceding claims, wherein the energy storage suspension (100) arrangement further comprises a sealing element arranged between the second end (106) of the first member (102) and the first end (204) of the second member (202).

9. The energy storage suspension arrangement of any one of the preceding claims, wherein the first (102) and second (202) members have the same shape and dimensions.

10. The energy storage suspension arrangement of any one of the preceding claims, wherein at least one of the first (102) and second (202) members is formed by metal extrusion.

11. An energy storage system assembly (500), comprising:
- at least one energy storage module (400), and
- an energy storage suspension arrangement (100) according to any one of the preceding claims, wherein the least one energy storage module is at least partly supported by the energy storage suspension arrangement.

12. A vehicle (10), comprising an energy storage system assembly according to claim 11.

13. A method of assembling an energy storage suspension arrangement, the method comprising:
- rotationally locking (S1) a nut (210) to a second aperture (208) arranged at a first end (204) of a second member (202),
- positioning (S2) a second end (106) of a first member (102) in abutment with the first end (204) of the second member (202), and
- guiding (S3) a rod (300) through a through hole arranged at the second end (106) of the first member (102) and thread the rod (300) to internal threads of the nut (210) to connect the first (102) and second (202) members to each other.

14. The method of claim 13, further comprising:
- connecting a first end (104) of the first member to an external vehicle structure.

15. The method of claim 14, wherein the first end (104) of the first member (102) is connected to the external vehicle structure by a fastener element (110) attached to a first aperture arranged at the first end of the first member.
